# EUROPEAN PATENT SPECIFICATION

(11) **EP 3 592 580 B1**
(45) Date of publication and mention of the grant of the patent: **01.11.2023**
(21) Application number: 17708799.6
(22) Date of filing: 06.03.2017
(51) Int. Cl.: B60D 1/48

(54) **A TOW BAR ASSEMBLY AND A METHOD FOR MOUNTING A TOW BAR ASSEMBLY TO A VEHICLE**
SCHLEPPSTANGENANORDNUNG UND VERFAHREN ZUR MONTAGE EINER SCHLEPPSTANGENANORDNUNG AN EINEM FAHRZEUG
ENSEMBLE BARRE DE REMORQUAGE ET PROCÉDÉ DE MONTAGE D'UN ENSEMBLE BARRE DE REMORQUAGE SUR UN VÉHICULE

(43) Date of publication of application: 15.01.2020
(73) Proprietor: Brink Towing Systems B.V., 7951 CX Staphorst (NL)
(72) Inventor: KOETSIER, Robert, 8171 KT Vaassen (NL); LESKENS, Harmen, 8024 XM Zwolle (NL)
(74) Representative: Valea AB
(86) International application number: PCT/EP2017/055151
(87) International publication number: WO 2018/162025

(56) References cited:
- EP-A1- 2 433 852
- DE-A1- 19 603 873
- DE-U1- 8 530 471
- DE-U1-202010 012 938
- FR-A1- 2 920 698

## Description

### TECHNICAL FIELD

Embodiments herein relate to a tow bar assembly for a vehicle and a method for mounting the tow bar assembly to the vehicle. The tow bar has an improved structure for distributing loads, thereby reducing the risk of failure of the tow bar assembly.

### BACKGROUND OF THE INVENTION

Towing hook arrangements for towing e.g. trailers are commonly used today. In most of the cases a tow bar comprising a towing hook is mounted at the rear of a vehicle during the assembly process of the vehicle, although after sales mounting e.g. by an authorized garage is possible. For esthetical and practical reasons it may be desirable to have a towing hook which can be positioned between a towing position and a retracted position. Generally such towing hooks are referred to as retractable towing hooks.

The tow bar of a towing hook arrangement is generally extending in a transverse direction with respect to the vehicle and attached to the vehicle at two vehicle attachment sites on either side of the towing bar. A towing hook is subjected to substantial forces when towing. Just as a matter of example, a towing hook for a regular car may be adapted to a maximum towing weight of 2500 kg and a maximum vertical load of 100 kg. However, larger vehicles, such as e.g. Sport Utility Vehicles (SUVs), may have a maximum towing capacity of up to 3500 kg. The vertical load, sometimes referred to as nose load, is a downwardly directed load due to gravity of the towable object e.g. a trailer, and the load positioned on e.g. the trailer such as rubble or stones. The tow bar is further subjected to dynamic loads, due to e.g. acceleration, braking, curbs, etc.

The vertical load, a horizontal load, and/or the dynamic loads impart the tow bar with torsion. The imparted torsion is dependent on the length of the towing hook which acts as a lever on the tow bar. Tow bars mounted to vehicles with a high towing capacity and a high ride height, such as e.g. SUVs, are particularly exposed to high torsion. The reason for this being that a high weight acts on a towing hook with an increased length in order to compensate for the increased ride height of the vehicle. To compensate for torsion, tow bar manufacturers generally use thicker and stronger material in the tow bar. However, in some cases fastening means securing the tow bar assembly to the vehicle tend to fail instead of the tow bar assembly itself.

Document EP 2 433 852 A1 relates according to its abstract to a vehicle body structure in which load or stress can be sufficiently transferred also to a wall surface of a member that includes a rear side member and has a polygonal cross-section. A fastening portion of a member such as a towing hitch member is attached below a first surface of a member such as rear side members, for example by interposing a rear floor pan side. A stiffening bracket is attached from above a second surface opposite to a first surface of the rear side members, and these are fastened by a nut and a bolt. In addition, the bracket is fastened to lateral surfaces of the rear side members by bolts and nuts.

Document DE 8530417 U1 relates to a towing device, in particular for cars, with rear longitudinal beams that are open to the rear. The towing device has two tubular longitudinal struts fastened to a crossbar, which are pushed into the longitudinal beams and are fixed in the longitudinal beams with an approximately vertically extending screw and a spacer sleeve, wherein each spacer sleeve is firmly connected to the longitudinal strut, penetrates it and projects beyond it on both sides, the spacer sleeve being slightly smaller in height than the distance between the walls of the side member in the assigned fastening area.

Document DE 20 2010 012 938 U1 relates according to its abstract to an underride guard for attachment to the rear of a truck, with a boom pivotably mounted on a frame of the truck about a horizontal pivot axis running perpendicular to a longitudinal axis of the truck. The underride guard comprises two spaced-apart pivot arms, and a ramp profile at ends of the pivot arms remote from the pivot axis, the ramp profile being horizontal and perpendicular to the longitudinal axis of the vehicle, wherein the boom can be pivoted from a street position to a terrain position in which the distance of the ramp profile from a contact plane of the truck is greater than in the street position, wherein a ball head coupling is arranged on the ramp profile, which in the street position of the boom is approximately aligned vertically.

Document FR 2 920 698 A1 relates according to its title and abstract to a coupling device for receiving bicycle in e.g. a trailer of a motor vehicle. The device has a coupling crossbar fixed to a body structure by two lateral flanges, which are fixed to the body structure by filtration blocks, such as silent blocks made of a filtration material, such as elastomer material, or shock/vibration absorption material. Each filtration block is fixed between the respective flange and the body structure by a fixation screw, where the flanges are integrated to two ends of the crossbar.

Document DE 196 03 873 A1 relates according to its abstract to a trailer attachment device having a trailer coupling. The device is fitted to the frame of a road vehicle. The fixing points or connecting points are made with elastic damping elements. The trailer coupling, coupling bar or fixing element is made of a non-ferrous material. At least one fixing point between the coupling and its bar has at least one elastic damping element. At least one connecting point between the coupling bar and the fixing beam has an elastic damping element.

### SUMMARY OF THE INVENTION

It is therefore an object of the present disclosure to provide an improved tow bar assembly which reduces the risk of failure of the tow bar, especially due to breaking, slipping and/or loosening of fastening means connecting the tow bar assembly to a vehicle.

The object is at least partly achieved by a tow bar assembly for a vehicle according to claim 1. The tow bar assembly is adapted to carry a towing hook. The tow bar assembly comprises at least one vehicle connection portion comprising a vehicle facing surface arranged to be positioned adjacent to a vehicle surface after being mounted to the vehicle. The connection portion is connectable to said vehicle at a plurality of connection points. The vehicle connection portion comprises a plurality of distinct spacers adapted to provide a distance between said vehicle facing surface of said vehicle connection portion and said opposing vehicle surface. The spacers are arranged in the vicinity of said connection points. By providing spacers in the vicinity of the connection points the vehicle facing surface of the vehicle connection portion is spaced apart from the vehicle surface. Thereby no loads are transferred directly between the two surfaces which may create axial forces in the fastening means, instead the only connection between the opposing surfaces is via the spacers. Thereby, loads are transferred through the fastening means which are arranged in the vicinity of the connection point and the spacers. This reduces the forces, such as e.g. axial forces, acting on the fastening means which reduces the risk of the fastening means breaking, slipping or running loose.

The spacers may be separate and distinct from each other. This further improves the load distribution, since forces acting on one spacer are not transferred to the spacers located in the vicinity of other connection points.

The spacers are formed by a rigid material, such as e.g. steel or aluminium, which ensures that the distance between the vehicle facing surface and the vehicle surface remains constant.

The spacer may be arranged around a connection point. Thereby a uniform load distribution around the connection point can be provided which further reduces the risk of damaging the connection element.

According to the invention the spacers are washers. These are available in standard various standard sizes and are therefore cheap and easy to arrange in the vicinity of the connection point.

The connection points may be through holes and the spacers may be arranged coaxially with the through holes. The through holes may be adapted to receive a fastening means for connecting the tow bar to said vehicle. Thereby the fastening means can be inserted through the through holes and the spacer in one single action to fasten the tow bar assembly to the vehicle. Thereby the assembly time can be reduced.

The spacers in the form of washers are fixedly connected to the vehicle connection portion of the tow bar assembly. By fixedly arranging the spacer to the vehicle connection portion handling of individual spacers during assembly can be eliminated which saves costs and assembly time. The washers are welded or glued to the vehicle connection portion.

The spacers can also be milled out or stamped out of the vehicle connection portion.

The spacers may distance said vehicle facing surface of said vehicle connection portion and said opposing vehicle surface in the range of 0.1 mm to 15 mm, preferably in the range of 0.25 mm to 10 mm and most preferably in the range of 0.5 mm to 5 mm.

The tow bar assembly may comprise a first and a second vehicle connection portion.

The object is further achieved by a method for mounting a tow bar assembly to a rear portion of a vehicle according to claim 12. The method comprises providing a tow bar assembly comprising at least one vehicle connection portion, preferably two vehicle connection portions. The method further comprises distancing the tow bar assembly from a rear portion of a vehicle by at least one spacer between the vehicle facing surface of the vehicle connection portion and the rear portion of the vehicle such that the vehicle facing surface of the vehicle connection portion is distanced from the rear portion of the vehicle. The method further comprises fixing the tow bar assembly to the rear portion of the vehicle by means of at least one fastening means. By arranging the tow bar assembly at a distance from the vehicle surface, the load on the fastening means is improved which reduces the risk of damages to the fastening means due to loads applied on a towing hook.

The method may further comprise fixedly arranging the spacers to the vehicle facing surface in the vicinity of the connection points. By fixedly arranging the spacers to the vehicle facing surface the mounting is facilitated since the spacers do not have to be positioned correctly during the assembly process while at the same time trying to insert fastening means through the connection points. Thereby, the mounting process is easier and faster.

### BRIEF DESCRIPTION OF THE DRAWINGS

Non-limiting embodiments of the present invention will be described in greater detail with reference to the accompanying figures.
- Figure 1: shows a tow bar assembly;
- figure 2: shows an embodiment of a main bracket of the tow bar assembly;
- figure 3: shows an improved end section viewed from above;
- figure 4a-f: show embodiments of spacers for the tow bar assembly;
- figure 5: shows the improved end section in a mounted state;
- figure 6: shows a schematic process diagram of a method for mounting a tow bar assembly to a vehicle.

### DETAILED DESCRIPTION OF PREFERRED EMBODIMENTS

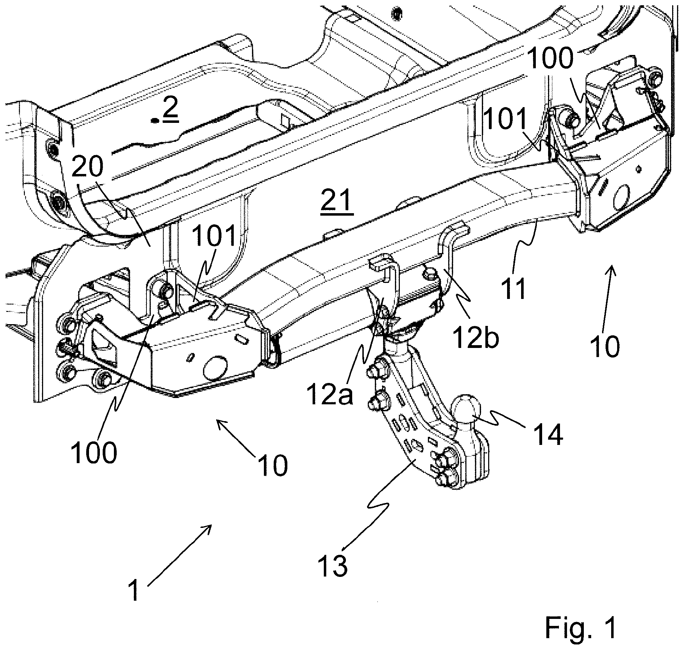

**Figure 1** discloses a tow bar assembly 1 according to embodiments disclosed herein. The tow bar assembly 1 comprises a tow bar 11 which may also be referred to as a middle section, a first and a second end section 10 and a towing hook receiving portion 12 for receiving a towing hook 13 comprising a tow ball 14 for receiving e.g. a trailer coupling or an auxiliary device for carrying luggage, such as e.g. a bike carrier. The towing hook may be a retractable towing hook, a removable towing hook or a fixed towing hook. The tow bar 11 may be formed by a tube like section having a circular, rectangular or polygonal cross-section. In some embodiments the tow bar 11 may be extruded. The tube like section of the tow bar 11 may be straight or may comprise one or more bends in order to adjust the location of the towing hook connection portion in relation to the end section 10. The tube like section may e.g. be bent in order to provide additional space for mounting and housing the towing hook in a vertical direction. The towing hook receiving portion 12 in the embodiment disclosed in figure 1 is formed by two opposing steel brackets 12a, 12b but may be formed in any other suitable way for receiving a towing hook, such as e.g. by means of a single bracket. The brackets 12a, 12b of the towing hook receiving portion may be connected to the tow bar 11 by welding, adhesive or by means of fastening means, such as e.g. screw(s), bolt(s), rivets or the like.

The end sections 10 comprise a vehicle connection portion 100 for mounting the end section 10 to a rear portion 20, such as e.g. a back panel, of a vehicle 2 and a tow bar connection portion 101 for connecting the tow bar 11 to the end section 10. The vehicle connection portion 100 is arranged substantially parallel to a rear portion 20 of the vehicle 2 and is adapted to be mounted to the rear portion 20 of the vehicle 2, or more specifically to a rear portion of the vehicle chassis. The vehicle connection portion 100 comprises a vehicle facing surface 100a which when the vehicle connection portion 100 is attached to the vehicle is directed to the vehicle surface 21 of the rear portion 20 of the vehicle 2. The tow bar connection portion 101 may be arranged adjacent and substantially parallel to the end of the tow bar 11 and may be joined to the tow bar 11 by welding, adhesive or by means of fastening means, such as e.g. screw(s), bolt(s), rivets or the like. The end section 10 is arranged for transferring loads acting on the towing hook 13 to the rear portion 20 of the vehicle 2. In previous tow bar assemblies the entire vehicle facing surface 100a further abuts the vehicle surface 21 of the rear portion 20 opposite of the vehicle facing surface 101a so that the surfaces are in contact with each other. Thereby levering forces may be created between the two surfaces when the tow bar assembly 1 is imparted with torsion due to loads acting on the towing hook 13. Due to the levering forces the fastening means 107 may be exposed to shear and axial forces, which may cause the fastening means 107 to break and/or coming loose.

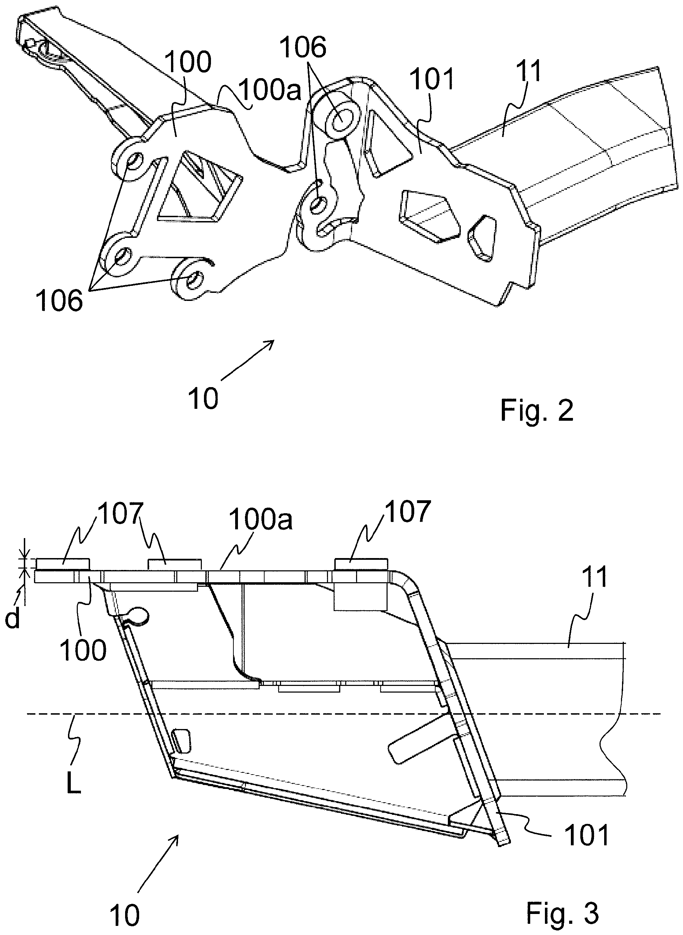

**Figure 2** discloses a front view close up of the vehicle connection portion 100 and the tow bar connection portion 101 of the end section 10. The vehicle connection portion 100 is arranged to be attached substantially parallel to a rear wall of the vehicle and comprises at least one connection point 106 for securing the vehicle connection portion 100 to the rear portion 20 of the vehicle 2. The tow bar connection portion 101 is arranged at an angle to the rear portion 20 of the vehicle 2 parallel to an end section of the tube like section of the tow bar 11 and is attached to the end section of the tube like section of the tow bar 11. The connection points 106 may be through holes which may be adapted to receive a fastening means for connecting the tow bar assembly to the vehicle 2. The vehicle connection portion 100 and the tow bar connection portion 101 may be manufactured from a single sheet of material. The material may be a metal, such as for example steel. The vehicle connection portion 100 and the tow bar connection portion 101 may be fixed to each other, such that they form a main bracket for mounting the tow bar 11 to the vehicle. In some embodiments the vehicle connection portion 100 and the tow bar connection portion 101 may be formed from a single sheet of material which may be bent into the shape of the main bracket. The fastening means may be bolt(s), screw(s), rivets, or the like. In order to reduce the risk of the fastening means breaking, slipping or loosening due to torsion of the tow bar assembly 1 spacers (not shown) are arranged between the vehicle facing surface 100a of the vehicle connection portion 100 and the opposing vehicle surface 21 when the tow bar assembly 1 is mounted to the vehicle 2. The spacers provide a distance between the vehicle facing surface 100a and the opposing vehicle surface 21 illustrated by a dashed line in figure 2, such that the entire surfaces don't abut each other. The only connection between the surfaces 100a, 21 is provided via the spacers, which are located in the vicinity of the connection points 106, and forces may be transferred from the tow bar assembly 1 to the vehicle 2 via the fastening means. Thereby the shear and axial forces in the fastening means located at the connection points 106 can be reduced which reduces the risk of the fastening means breaking, slipping or coming loose. It should be noted that when the towing hook is subjected to a relatively high load, the vehicle facing surface 100a and the opposing vehicle surface 21 may contact each other due to the elasticity of the material of the components of the tow bar assembly 1, thus acting as a lever that increases the axial forces in the fastening means. However, the distance provided by the spacers 107 reduces the amount of force which is transferred during such contact. Hence in general terms; the spacer may be adapted to permit temporarily contact between the vehicle facing surface 100a and the opposing vehicle surface 21 after assembly, or optionally distance the vehicle facing surface 100a and the opposing vehicle surface 21 after assembly enough to prevent contact between the vehicle facing surface 100a and the opposing vehicle surface 21 after assembly.

**Figure 3** discloses the end section 10 seen from above. As can be seen in the figure 3, the vehicle connection portion 100 is substantially parallel to a longitudinal axis L of the tow bar 11. The tow bar connection portion 101 is arranged in parallel to an end surface of the tow bar 11, such that the complete periphery of the end surface of the tow bar 11 abuts a tow bar connection surface. In some embodiments the vehicle connection portion 100 and the tow bar connection portion 101 are made out of a single sheet of material that is bent in shape. On the vehicle facing surface of the vehicle connection portion 100 spacers 107 are arranged, which provide a distance between the vehicle facing surface 100a and the opposing vehicle surface 21 when the tow bar assembly is mounted to the vehicle 2. Hence, the spacers are arranged between the vehicle facing surface 100a and the opposite vehicle surface 2 in a longitudinal direction of the vehicle 2. The spacers 107 have a minimal thickness d which in the shown embodiment is large enough to ensure that the vehicle facing surface 100a and the opposing vehicle surface 21 don't abut each other. The thickness d of the spacers may be in the range of 0,1 to 15 mm, preferably in the range of 0.25 mm to 10 mm and most preferably in the range of 0.5 to 5mm. The maximum thickness d is determined by the available space behind a cover located around the tow bar assembly, such as e.g. a bumper of the vehicle 2.

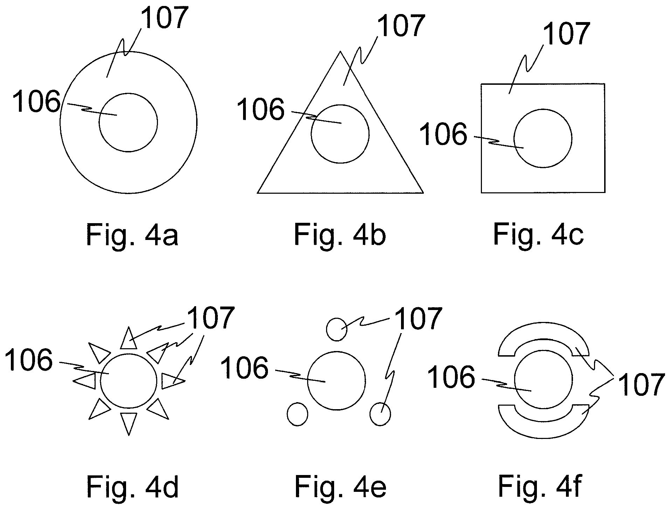

**Figure 4a-4f** show an overview of different possible shapes of the spacers 107 according to the current disclosure.

The spacer disclosed in figure 4a has a circular cross-section and is arranged coaxially around the connection point 106. The connection point 106 is in the shown embodiment formed by a through hole. The circular shape has the advantage that the abutment of the spacer 107 against the surfaces 100a, 21 is evenly distributed around the circumference of the connection point 106, which in this embodiment is configured as a through hole. The circular spacers may e.g. be washers. Washers are available in various standard sizes and are therefore cheap and easy to arrange in the vicinity of the connection point.

The spacers may also have a polygonal shape, such as e.g. a triangular shape as disclosed in figure 4b or a square shape as disclosed in figure 4c. Shapes having a larger number of corners may however also be provided. A polygonal shape may e.g. be used to adapt the spacer 107 to the available space and/or the shape of the connection area. A polygonal shape may also be advantageous in order to adapt the spacer to the connection point 106, when connection points 106 of other types than through holes are used.

The spacers according to figure 4a-4c may comprise a through hole for receiving the fastening means when the tow bar assembly 1 is mounted to the vehicle 2. The through hole in the spacer 107 may be arranged coaxially with the connection point 106. The through holes may be adapted to receive a fastening means for connecting the tow bar to said vehicle. Thereby the fastening means can be inserted through the through holes and the spacer in one single action to fasten the tow bar assembly to the vehicle, which reduces the time and effort required for mounting the tow bar assembly 1 to the vehicle 2.

In some embodiments a plurality of spacers 107 may also be arranged around a circumference of the connection point 106. Figure 4d discloses a first embodiment having a plurality of spacers around the circumference of the connection point 106. According to the specific embodiment shown in this figure 8 spacers having a triangular shape are arranged evenly distributed around the circumference of the connection point 106. The number and the shape of the spacers may however vary. Figure 4e e.g. discloses an embodiment where three circular spacers are evenly distributed around the circumference of the connection point. By arranging a plurality of spacers around the connection point 106, the size of each spacer 107 may be reduced which also reduces the friction between the surfaces 100a, 12a and the spacer when the tow bar assembly 1 is subjected to torsion.

The spacers 107 may also have a beam shape as disclosed in figure 4f. In the specific embodiment disclosed in figure 4f two beam shaped spacers 107 are arranged around the connection point 106. The beam shaped spacers 107 have a curved shape in order to follow the circumference of the connection point 106, which in this case is a through hole. The beam shaped spacer may however also have a straight shape. One or more beam shaped spacers may be arranged around the circumference of the connection point 106. The spacers according to any of the embodiments described above may be separate and distinct from each other. Thereby a single spacer can be arranged in the vicinity of each connection point 106. This improves the load distribution, since forces acting on one spacer 107 are not transferred to the spacers located in the vicinity of other connection points.

The spacers 107 may be arranged around each connection point. Thereby a uniform load distribution around the connection point can be provided which further reduces the risk of damaging the connection element. The spacers are formed by a rigid material, such as e.g. steel or aluminium, which ensures that the distance between the vehicle facing surface and the vehicle surface remains constant. The spacer 107 may be made of the same material as the vehicle connection portion 100.

The spacers 107 may be shaped by cutting, milling and/or bending sheets of material, such as e.g. metal sheets, into the determined shape. The spacers 107 are fixedly connected to the vehicle connection portion 100. The spacers 107 are welded or glued to the vehicle connection portion 100, milled out of the vehicle connection portion 100 or stamped out of the vehicle connection portion 100. By fixedly arranging the spacer 107 to the vehicle connection portion 100 the handling of individual spacers 107 during assembly can be eliminated which reduces costs and assembly time. The contact area of the one or more spacer(s) 107 associated with a unique through hole is preferably equal to, or larger than, the area of the through hole. By contact area is hereby meant that area which is in contact with the opposing vehicle surface 21. The total contact area of the one or more spacers 107 is preferably equal to, or larger than, the total area of the through holes.

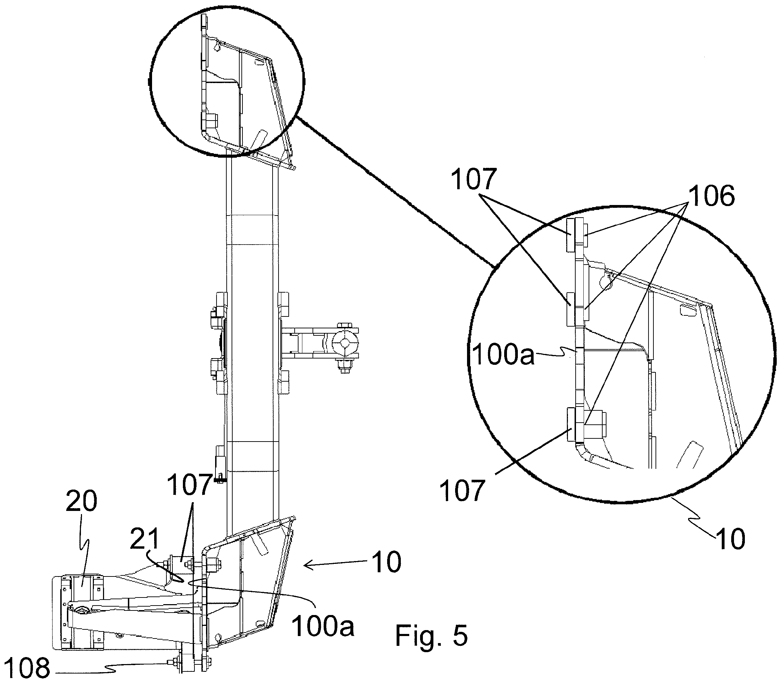

**Figure 5** discloses the tow bar assembly 1 according to the present disclosure in relation to a rear portion 20 of a vehicle. The magnification of the top end section 10 shows the location of the spacers 107 in relation to the end section 10. The spacers 107 are located in the vicinity of the connection points 106 and abut the vehicle facing surface 100a. When the tow bar assembly 1 is mounted to a vehicle, which is shown for the lower end section 10, the spacers create a distance between the vehicle facing surface 100a and the opposing vehicle surface 21 of the rear portion 20. The tow bar assembly 1 may be connected to the rear portion 20 of the vehicle by means of fastening means 108. The fastening means may e.g. be bolt(s), screw(s) or rivet(s), which are inserted through the vehicle connection portion 100, the spacer 107 and the rear portion 20 of the vehicle in order to secure these together. By spacing the surfaces 100a, 21 apart, the loads acting on the towing hook are transferred via the fastening means 108 and/or the spacers 107 instead of via the entire surfaces 100a, 21. Thereby the shear and axial forces acting on the fastening means 108 can be reduced which reduces the risk of the fastening means 108 breaking, slipping or coming loose. The spacers 107 enable the vehicle connection portion 100 to flex somewhat which enable the vehicle connection portion 100 to absorb some of the forces acting on the tow bar assembly 1 via an imparted load on the towing hook 13.

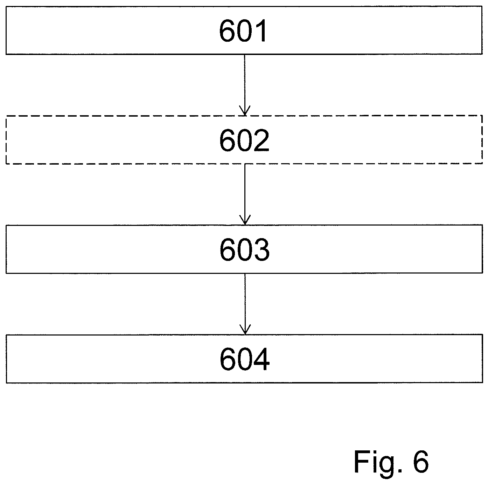

It is further an object of the present disclosure to provide a method for mounting a tow bar assembly 1 to a rear portion 20 of a vehicle 2. An embodiment of the method for mounting the tow bar assembly 1 to the vehicle 2 will in the following be disclosed with reference to **figure 6****.**

In step 601, a tow bar assembly 1 comprising at least one vehicle connection portion 100, preferably two vehicle connection portions 100, is provided.

In step 602, at least one spacer 107 may be fixedly arranged on the vehicle facing surface 100a of the vehicle connection portion 100 in the vicinity of the connection point 106. The spacer may be arranged on the vehicle facing surface 100a by welding additional material forming the spacer 107 to the vehicle connection portion 100, by milling material out of the vehicle connection portion 100 thereby forming the spacer or by stamping the spacer out of the material of the vehicle connection portion 100 using e.g. a pressing tool. A spacer may also be provided as an individual element. Hence, step 602 is optional which is indicated by the dashed lines in figure 6. In some embodiments, the at least one spacer 107 may also be fixedly arranged to the rear portion 20 of the vehicle 2. The spacer may be arranged on the rear portion 20 of the vehicle 2 by welding additional material forming the spacer 107 to the rear portion 20 or by stamping the spacer out of the material of the rear portion 20 using e.g. a pressing tool.

In step 603, the tow bar assembly 1 is distanced with respect to a rear portion 20 of a vehicle 2 by providing at least one spacer 107 between the vehicle facing surface 100a of the vehicle connection portion 100 and the rear portion 20 of the vehicle 2. The at least one spacer 107 is arranged such that the vehicle facing surface 100a of the vehicle connection portion 100 is distanced from the rear portion 20 of the vehicle 2. By arranging the tow bar assembly at a distance from the vehicle surface, the load on the fastening means is improved which reduces the risk of damages to the fastening means due to loads applied on a towing hook.

In step 604, the tow bar assembly 1 is fixed, which may also be referred to as being secured, to the rear portion 20 of the vehicle 2 by means of at least one fastening means 108.

## Claims

1. A tow bar assembly (1) for a vehicle, said tow bar assembly (1) being adapted to carry a towing hook, said tow bar assembly (1) comprising at least one vehicle connection portion (100) comprising a vehicle facing surface (100a) arranged to be positioned adjacent to an opposing vehicle surface after being mounted to said vehicle (2), said vehicle connection portion (100) being connectable to said vehicle at a plurality of connection points (106),
the vehicle connection portion (100) comprising a plurality of distinct spacers (107) adapted to provide a distance between said vehicle facing surface (100a) of said vehicle connection portion (100) and said opposing vehicle surface (21), wherein the spacers (107) are arranged in the vicinity of said connection points (106), said spacers (107) are arranged between said vehicle facing surface (100a) and said opposing vehicle surface (21) in a longitudinal direction of said vehicle (2),
**characterized in that**
said spacers (107) are formed by a rigid material, and
said spacers (107) are washers welded or glued to the vehicle connection portion (100), milled out of the connection portion (100) or stamped out of the vehicle connection portion (100).

2. The tow bar assembly (1) according to claim 1, wherein the spacers (107) are separate and distinct from each other.

3. The tow bar assembly (1) according to claim 1 or 2, wherein the spacers (107) are formed by steel or aluminium.

4. The tow bar assembly (1) according to any of the preceding claims, wherein a spacer (107) is arranged around a connection point (106).

5. The tow bar assembly (1) according to any of the preceding claims, wherein the connection points (106) are through holes and the spacers (107) are arranged coaxially with the through holes.

6. The tow bar assembly (1) according to claim 5, wherein the through holes are adapted to receive a fastening means for connecting the tow bar to said vehicle.

7. The tow bar assembly (1) according to any of the preceding claims, wherein at least some of the spacers (107) are fixedly connected to the vehicle connection portion (100).

8. The tow bar assembly (1) according to any of the preceding claims, wherein the spacers (107) distance said vehicle facing surface of said vehicle connection portion (100) and said opposing vehicle surface in the range of 0.1 mm to 15 mm.

9. The tow bar assembly (1) according to any of the preceding claims, wherein the spacers (107) distance said vehicle facing surface of said vehicle connection portion (100) and said opposing vehicle surface in the range of 0.25 mm to 10 mm.

10. The tow bar assembly (1) according to any of the preceding claims, wherein the spacers (107) distance said vehicle facing surface of said vehicle connection portion (100) and said opposing vehicle surface in the range of 0.5 mm to 5 mm.

11. The tow bar assembly (1) according to any of the preceding claims, wherein said tow bar assembly (1) comprises a first and a second vehicle connection portion (100).

12. Method for mounting a tow bar assembly (1) to a rear portion of a vehicle, the method comprising:
- providing a tow bar assembly (1) comprising at least one vehicle connection portion (100), preferably two vehicle connection portions (100),
- distancing the tow bar assembly (1) from a rear portion (20) of a vehicle by at least one spacer (107) between the vehicle facing surface (100a) of the vehicle connection portion (100) and an opposing vehicle surface (21) of the rear portion (20) of the vehicle, such that the vehicle facing surface (100a) of the vehicle connection portion (100) is distanced from said opposing vehicle surface (21) of the rear portion (20) of the vehicle, wherein said spacers (107) are arranged between said vehicle facing surface (100a) and said opposing vehicle surface (21) in a longitudinal direction of said vehicle (2), said spacers being formed by a rigid material, said spacers being washers welded or glued to the vehicle connection portion (100), milled out of the connection portion (100) or stamped out of the vehicle connection portion (100), and
- fixing the tow bar assembly (1) to the rear portion of the vehicle by means of at least one connection element.

13. The method according to claim 12, wherein the method further comprises:
- fixedly arranging the spacers (107) to the vehicle facing surface (100a) in the vicinity of the connection points (106).

## Patentansprüche

1. Abschleppstangenbaugruppe (1) für ein Fahrzeug, wobei die Abschleppstangenbaugruppe (1) angepasst ist, um einen Abschlepphaken zu tragen, die Abschleppstangenbaugruppe (1) umfassend mindestens einen Fahrzeugverbindungsabschnitt (100), umfassend eine dem Fahrzeug zugewandte Oberfläche (100a), die angeordnet ist, um angrenzend an eine gegenüberliegende Fahrzeugoberfläche positioniert zu werden, nachdem sie an dem Fahrzeug (2) montiert wurde, wobei der Fahrzeugverbindungsabschnitt (100) an der Vielzahl von Verbindungspunkten (106) mit dem Fahrzeug verbindbar ist,
der Fahrzeugverbindungsabschnitt (100) umfassend eine Vielzahl von verschiedenen Abstandshaltern (107), die angepasst sind, um eine Distanz zwischen der dem Fahrzeug zugewandten Oberfläche (100a) des Fahrzeugverbindungsabschnitts (100) und der gegenüberliegenden Fahrzeugoberfläche (21) bereitzustellen, wobei die Abstandshalter (107) in der Nähe der Verbindungspunkte (106) angeordnet sind, wobei die Abstandshalter (107) zwischen der dem Fahrzeug zugewandten Oberfläche (100a) und der gegenüberliegenden Fahrzeugoberfläche (21) in einer Längsrichtung des Fahrzeugs (2) angeordnet sind,
**dadurch gekennzeichnet, dass**
die Abstandshalter (107) durch ein starres Material gebildet sind und
die Abstandshalter (107) Unterlegscheiben sind, die an den Fahrzeugverbindungsabschnitt (100) geschweißt oder geklebt, aus dem Verbindungsabschnitt (100) herausgefräst oder aus dem Fahrzeugverbindungsabschnitt (100) gestanzt werden.

2. Abschleppstangenbaugruppe (1) nach Anspruch 1, wobei die Abstandshalter (107) getrennt und voneinander verschieden sind.

3. Abschleppstangenbaugruppe (1) nach Anspruch 1 oder 2, wobei die Abstandshalter (107) durch Stahl oder Aluminium gebildet sind.

4. Abschleppstangenbaugruppe (1) nach einem der vorstehenden Ansprüche, wobei ein Abstandshalter (107) um einen Verbindungspunkt (106) herum angeordnet ist.

5. Abschleppstangenbaugruppe (1) nach einem der vorstehenden Ansprüche, wobei die Verbindungspunkte (106) Durchgangslöcher sind und die Abstandshalter (107) zu den Durchgangslöchern koaxial angeordnet sind.

6. Abschleppstangenbaugruppe (1) nach Anspruch 5, wobei die Durchgangslöcher angepasst sind, um ein Befestigungsmittel zum Verbinden der Abschleppstange mit dem Fahrzeug aufzunehmen.

7. Abschleppstangenbaugruppe (1) nach einem der vorstehenden Ansprüche, wobei mindestens einige der Abstandshalter (107) mit dem Fahrzeugverbindungsabschnitt (100) fixiert verbunden sind.

8. Abschleppstangenbaugruppe (1) nach einem der vorstehenden Ansprüche, wobei die Abstandshalter (107) die dem Fahrzeug zugewandte Oberfläche des Fahrzeugverbindungsabschnitt (100) und die gegenüberliegende Fahrzeugoberfläche in dem Bereich von 0,1 mm bis 15 mm distanzieren.

9. Abschleppstangenbaugruppe (1) nach einem der vorstehenden Ansprüche, wobei die Abstandshalter (107) die dem Fahrzeug zugewandte Oberfläche des Fahrzeugverbindungsabschnitt (100) und die gegenüberliegende Fahrzeugoberfläche in dem Bereich von 0,25 mm bis 10 mm distanzieren.

10. Abschleppstangenbaugruppe (1) nach einem der vorstehenden Ansprüche, wobei die Abstandshalter (107) die dem Fahrzeug zugewandte Oberfläche des Fahrzeugverbindungsabschnitt (100) und die gegenüberliegende Fahrzeugoberfläche in dem Bereich von 0,5 mm bis 5 mm distanzieren.

11. Abschleppstangenbaugruppe (1) nach einem der vorstehenden Ansprüche, wobei die Abschleppstangenbaugruppe (1) einen ersten und einen zweiten Fahrzeugverbindungsabschnitt (100) umfasst.

12. Verfahren zum Montieren einer Abschleppstangenbaugruppe (1) an einem hinteren Abschnitt eines Fahrzeugs, das Verfahren umfassend:
- Bereitstellen einer Abschleppstangenbaugruppe (1), umfassend mindestens einen Fahrzeugverbindungsabschnitt (100), vorzugsweise zwei Fahrzeugverbindungsabschnitte (100),
- Distanzieren der Abschleppstangenbaugruppe (1) von einem hinteren Abschnitt (20) eines Fahrzeugs durch mindestens einen Abstandshalter (107) zwischen der dem Fahrzeug zugewandten Oberfläche (100a) des Fahrzeugverbindungsabschnitts (100) und einer gegenüberliegenden Fahrzeugoberfläche (21) des hinteren Abschnitts (20) des Fahrzeugs, derart, dass die dem Fahrzeug zugewandte Oberfläche (100a) des Fahrzeugverbindungsabschnitts (100) von der gegenüberliegenden Fahrzeugoberfläche (21) des hinteren Abschnitts (20) des Fahrzeugs distanziert ist, wobei die Abstandshalter (107) zwischen der dem Fahrzeug zugewandten Oberfläche (100a) und der gegenüberliegenden Fahrzeugoberfläche (21) in einer Längsrichtung des Fahrzeugs (2) angeordnet sind, wobei die Abstandshalter durch ein starres Material ausgebildet sind, wobei die Abstandshalter Unterlegscheiben sind, die an den Fahrzeugverbindungsabschnitt (100) geschweißt oder geklebt, aus dem Verbindungsabschnitt (100) herausgefräst oder aus dem Fahrzeugverbindungsabschnitt (100) gestanzt werden, und
- Fixieren der Abschleppstangenbaugruppe (1) an dem hinteren Abschnitt des Fahrzeugs mittels mindestens eines Verbindungselements.

13. Verfahren nach Anspruch 12, wobei das Verfahren ferner umfasst:
- fixiertes Anordnen der Abstandshalter (107) an der dem Fahrzeug zugewandten Oberfläche (100a) in der Nähe der Verbindungspunkte (106).

## Revendications

1. Ensemble barre de remorquage (1) pour un véhicule, ledit ensemble barre de remorquage (1) étant adapté au transport d'un crochet de remorquage, ledit ensemble barre de remorquage (1) comprenant au moins une partie de liaison de véhicule (100) comprenant une surface faisant face vers le véhicule (100a) agencée pour être positionnée adjacente à une surface de véhicule opposée après être montée sur ledit véhicule (2), ladite partie de liaison de véhicule (100) pouvant être reliée audit véhicule au niveau d'une pluralité de points de liaison (106),
la partie de liaison de véhicule (100) comprenant une pluralité d'entretoises distinctes (107) adaptées à la fourniture d'une distance entre ladite surface faisant face vers le véhicule (100a) de ladite partie de liaison de véhicule (100) et ladite surface de véhicule opposée (21), dans lequel les entretoises (107) sont agencées au voisinage desdits points de liaison (106), lesdites entretoises (107) sont agencées entre ladite surface faisant face vers le véhicule (1 00a) et ladite surface de véhicule opposée (21) dans une direction longitudinale dudit véhicule (2),
**caractérisé en ce que**
lesdites entretoises (107) sont formées par un matériau rigide, et lesdites entretoises (107) sont des rondelles soudées ou collées à la partie de liaison de véhicule (100), fraisées à partir de la partie de liaison (100) ou estampées à partir de la partie de liaison de véhicule (100).

2. Ensemble barre de remorquage (1) selon la revendication 1, dans lequel les entretoises (107) sont séparées et distinctes les unes des autres.

3. Ensemble barre de remorquage (1) selon la revendication 1 ou 2, dans lequel les entretoises (107) sont formées par de l'acier ou de l'aluminium.

4. Ensemble barre de remorquage (1) selon l'une quelconque des revendications précédentes, dans lequel une entretoise (107) est agencée autour d'un point de liaison (106).

5. Ensemble barre de remorquage (1) selon l'une quelconque des revendications précédentes, dans lequel les points de liaison (106) sont des trous traversants et les entretoises (107) sont agencées coaxialement avec les trous traversants.

6. Ensemble barre de remorquage (1) selon la revendication 5, dans lequel les trous traversants sont adaptés à la réception d'un moyen de serrage permettant de relier la barre de remorquage audit véhicule.

7. Ensemble barre de remorquage (1) selon l'une quelconque des revendications précédentes, dans lequel au moins certaines des entretoises (107) sont reliées de manière fixe à la partie de liaison de véhicule (100).

8. Ensemble barre de remorquage (1) selon l'une quelconque des revendications précédentes, dans lequel les entretoises (107) distancent ladite surface faisant face vers le véhicule de ladite partie de liaison de véhicule (100) et ladite surface de véhicule opposée dans la plage de 0,1 mm à 15 mm.

9. Ensemble barre de remorquage (1) selon l'une quelconque des revendications précédentes, dans lequel les entretoises (107) distancent ladite surface faisant face vers le véhicule de ladite partie de liaison de véhicule (100) et ladite surface de véhicule opposée dans la plage de 0,25 mm à 10 mm.

10. Ensemble barre de remorquage (1) selon l'une quelconque des revendications précédentes, dans lequel les entretoises (107) distancent ladite surface faisant face vers le véhicule de ladite partie de liaison de véhicule (100) et ladite surface de véhicule opposée dans la plage de 0,5 mm à 5 mm.

11. Ensemble barre de remorquage (1) selon l'une quelconque des revendications précédentes, dans lequel ledit ensemble barre de remorquage (1) comprend une première et une seconde partie de liaison de véhicule (100).

12. Procédé permettant de monter un ensemble barre de remorquage (1) sur une partie arrière d'un véhicule, le procédé comprenant :
- la fourniture d'un ensemble barre de remorquage (1) comprenant au moins une partie de liaison de véhicule (100), de préférence deux parties de liaison de véhicule (100),
- la distanciation de l'ensemble barre de remorquage (1) d'une partie arrière (20) d'un véhicule par au moins une entretoise (107) entre la surface faisant face vers le véhicule (100a) de la partie de liaison de véhicule (100) et une surface de véhicule opposée (21) de la partie arrière (20) du véhicule, de telle sorte que la surface faisant face vers le véhicule (100a) de la partie de liaison de véhicule (100) est distanciée de ladite surface de véhicule opposée (21) de la partie arrière (20) du véhicule, dans lequel lesdites entretoises (107) sont agencées entre ladite surface faisant face vers le véhicule (100a) et ladite surface de véhicule opposée (21) dans une direction longitudinale dudit véhicule (2), lesdites entretoises étant formées par un matériau rigide, lesdites entretoises étant des rondelles soudées ou collées à la partie de liaison de véhicule (100), fraisées à partir de la partie de liaison (100) ou estampées à partir de la partie de liaison de véhicule (100), et
- la fixation de l'ensemble barre de remorquage (1) à la partie arrière du véhicule au moyen d'au moins un élément de liaison.

13. Procédé selon la revendication 12, dans lequel le procédé comprend en outre :
- l'agencement fixe des entretoises (107) à la surface faisant face vers le véhicule (100a) au voisinage des points de liaison (106).
